# EUROPÄISCHE PATENTANMELDUNG

(11) **EP 1 477 787 A1**
(43) Veröffentlichungstag der Anmeldung: **17.11.2004**
(21) Anmeldenummer: 04090172.0
(22) Anmeldetag: 05.05.2004
(51) Int. Cl.: G01K 13/02, A61J 9/02

(54) **Thermometer zur Anzeige von Verarbeitungs- und Verzehrtemperaturen von Babynahrung**

(30) Priorität: 15.05.2003 DE 20307973 U
(71) Anmelder: Scala Electronic GmbH, 14532 Stahnsdorf (DE)
(72) Erfinder: Kinz, Alois, 5230 Mattighofen (AT)
(74) Vertreter: Gulde, Klaus W.

(57) **Zusammenfassung**

Der Erfindung liegt nun die Aufgabe zugrunde, ein Thermometer zur Anzeige von Verarbeitungs- und Verzehrtemperaturen von Babynahrung anzubieten, das mit einem Messfühler, der die Temperatur in der Nahrung misst und gleichzeitig die gemessene Temperatur außerhalb der Flasche lesbar darstellt und zusätzlich beim Erreichen bestimmter, einstellbarer Temperaturen ein akustisches Signal gibt, ausgestattet ist.

Die Lösung der Aufgabe erfolgt durch ein Thermometer zur Anzeige von Verarbeitungs- und Verzehrtemperaturen von Babynahrung, bestehend aus einem Temperatursensor und einem Anzeigekopf, wobei zwischen dem Anzeigekopf und dem Temperatursensor ein Distanzrohr angeordnet ist, in dem Messwertübertragungsleitungen geführt sind, dadurch gekennzeichnet, dass der Anzeigenkopf eine aus einem Oberteil und einem Unterteil bestehende rotationssymmetrische, hohlkörperartige Grundform aufweist, wobei das Oberteil und das Unterteil trennbar verbunden sind, und am Unterteil das Distanzrohr angeordnet ist, und dass das Oberteil eine Anzeigenfläche mit einem Display aufweist, wobei im Anzeigekopf eine mit der Messwertübertragungsleitung verbundene Messwertverarbeitungseinheit, ein Signalgeber und eine Stromversorgungseinheit angeordnet sind.

## Beschreibung

Die Erfindung bezieht sich auf ein Thermometer zur Anzeige von Verarbeitungs- und Verzehrtemperaturen von Babynahrung gemäß dem Oberbegriff des Patentanspruches 1.

Bei der Zubereitung von Babynahrung und beim Verzehren spielt die Verarbeitungs- und Verzehrtemperatur eine wichtige Rolle. Für den Fall, dass eine Mutter nicht in der Lage ist, ihr Baby mit Muttermilch zu ernähren, muss sie auf Fertignahrung umstellen, die von verschiedenen Herstellern angeboten wird.

Bei der Herstellung von Milch wird Wasser in vorgeschriebener Menge abgekocht und nach Anweisung des entsprechenden Herstellers mit dem Milchpulver vermischt. Hierbei sind bestimmte Temperaturregime einzuhalten. Beispielsweise muss das Wasser nach dem Abkochen auf 50°C abgekühlt und dann das Milchpulver hinzugegeben werden. Die eigentliche Trinktemperatur liegt jedoch bei ca. 37°C. Die Mutter hat nun das Problem, den Zeitpunkt der Einstellung der erforderlichen Verarbeitungs- bzw. Verzehrtemperatur zu überwachen. Damit die Mutter nun nicht ständig mit dem Messen der Temperatur beschäftigt wird, die häufig auch durch Anlegen des Gefäßes an bestimmte Hautpartien durch die Mutter geschätzt wird, sind verschiedene Vorschläge bekannt geworden, welche die Temperaturbestimmung erleichtern sollen.

So wird in der DE 100 32 770 A1 ein Babyflaschen-Digitalthermometer beschrieben. Hierbei wird ein Digitalthermometer mit einem handelsüblichen Babyflaschendeckel dergestalt kombiniert, dass das Digitalthermometer unten am Babyflaschendeckel angebracht und durch eine Öffnung im Deckel die Anzeige sichtbar wird. Damit sei sichergestellt, dass nach Einführung des Thermometers die Innentemperatur der Babyflasche exakt bestimmt werden kann und dass der Säugling keiner Verbrühungsgefahr ausgesetzt wird. Dieses Babyflaschen-Digitalthermometer hat den entscheidenden Nachteil, dass die Mutter laufend den Temperaturverlauf, den das Digitalthermometer anzeigt, visuell überwachen muss. Sie ist also nur eingeschränkt in der Lage, nebenbei andere Arbeiten durchzuführen oder sich mit ihrem Baby zu beschäftigen.

In der DE 296 17 979 U1 wird eine Babyflasche mit Temperaturanzeige und akustischem Signal beim Erreichen der optimalen Temperatur beschrieben. Hier wird vorgeschlagen, die Babyflasche selbst mit einer digitalen Temperaturanzeige. zu versehen, die nach Erreichen einer bestimmten Temperatur ein akustisches Signal abgeben soll. Es soll auch eine Einstellmöglichkeit für die Temperatur sowie für das akustische Signal geben. Ein Sensor zum Messen der Temperatur ist ebenfalls vorgesehen. Allerdings ist nicht eindeutig klar, in welcher technischen Ausführung die Temperaturmessung, die Temperaturanzeige sowie die akustische Signalgebung erfolgen soll. Das Anbringen dieser Teile direkt an der Wandung der Flasche hat sehr viele Nachteile. Nach längerem Gebrauch könnte möglicherweise die technische Funktionsfähigkeit, die hier im Detail nicht näher beschrieben ist, durch Reinigungsprozeduren beeinträchtigt werden, so dass die Flasche mit der integrierten Temperaturmessung eine relativ teure Lösung darstellt.

Der Erfindung liegt nun die Aufgabe zugrunde, ein Thermometer zur Anzeige von Verarbeitungs- und Verzehrtemperaturen von Babynahrung anzubieten, das mit einem Messfühler, der die Temperatur in der Nahrung misst und gleichzeitig die gemessene Temperatur außerhalb der Flasche lesbar darstellt und zusätzlich beim Erreichen bestimmter, einstellbarer Temperaturen ein akustisches Signal gibt, ausgestattet ist.

Die Lösung der Aufgabe erfolgt mit den Merkmalen des Patentanspruches 1.

Demnach ist das Thermometer zur Anzeige von Verarbeitungs- und Verzehrtemperaturen von Babynahrung, bestehend aus einem Temperatursensor und einem Anzeigekopf, wobei zwischen dem Anzeigekopf und dem Temperatursensor ein Distanzrohr angeordnet ist, in dem Messwertübertragungsleitungen geführt sind, dadurch gekennzeichnet, dass der Anzeigenkopf eine aus einem Oberteil und einem Unterteil bestehende rotationssymmetrische, hohlkörperartige Grundform aufweist, wobei das Oberteil und das Unterteil trennbar verbunden sind, und am Unterteil das Distanzrohr angeordnet ist, und dass das Oberteil eine Anzeigenfläche mit einem Display aufweist, wobei im Anzeigekopf eine mit der Messwertübertragungsleitung verbundene Messwertverarbeitungseinheit, ein Signalgeber und eine Stromversorgungseinheit angeordnet sind.

Vorteilhafte Weiterbildungen sind in den Unteransprüchen angegeben.

So ist in der Anzeigefläche ein Ein- und Ausschalter angeordnet, mit dem das Thermometer in Betrieb gesetzt oder auch ausgeschaltet werden kann.

Als Stromversorgungseinheit ist vorteilhafterweise eine Batterie vorgesehen, die im Oberteil angeordnet ist.

Der Signalgeber kann als akustischer oder auch als optischer Signalgeber ausgebildet sein. Als vorteilhaft hat sich jedoch ein akustischer Signalgeber erwiesen, welcher der Mutter die Möglichkeit gibt, die Überwachung der Temperaturänderung in der Babynahrung aus größerer Entfernung zu überwachen.

Das Unterteil ist in einer weiteren, vorteilhaften Ausgestaltung der Erfindung trichterförmig ausgebildet. Damit ist es möglich, das Thermometer für Gefäße mit unterschiedlichen Einfüllöffnungen zu benutzen und gleichzeitig ein gewisses Verschließen der Öffnung während des Abkühlvorganges zu erreichen.

Eine kegelstumpfartige Ausbildung des Oberteiles des Anzeigekopfes ermöglicht vorteilhafterweise die Anordnung einer Anzeigefläche, die gut sichtbar ist.

Eine weitere Ausgestaltung der Erfindung sieht vor, dass das Unterteil und das Distanzrohr einteilig ausgebildet ist, was fertigungstechnische Vorteile bringt, aber auch die Reinigung erleichtert und darüber hinaus keine Dichtprobleme zwischen Distanzrohr und Unterteil bringt.

Die lösbare Verbindung zwischen Unter- und Oberteil kann beispielsweise über eine Schraubverbindung erfolgen.

Wichtig ist es, den elektronischen Teil möglichst weit vom zu messenden Medium und vom Sensor anzuordnen, um nachhaltige Beeinflussungen zu vermeiden. Deshalb ist in einer weiteren Ausgestaltung vorgesehen, diesen Teil im Oberteil des Anzeigekopfes unterzubringen.

Die Messwertverarbeitungseinheit ist in einer weiteren Ausbildung so ausgestaltet, dass ausgehend von einer deutlich höheren Temperatur des zu messenden Mediums als die Umgebungstemperatur beim Abkühlen bei bestimmten fest eingestellten oder einstellbaren Temperaturen akustische oder ggf. auch optische Signale erzeugt werden.
Die Mutter kann umgehend reagieren.

Im Folgenden wird die Erfindung anhand eines Ausführungsbeispieles sowie Zeichnungen näher erläutert.

Es zeigen
- **Fig. 1**: ein Thermometer in einer Babynahrungsflasche,
- **Fig. 2**: ein Thermometer mit geöffnetem Anzeigekopf,
- **Fig. 3**: ein Oberteil in Schnittdarstellung und
- **Fig. 4**: ein Oberteil in Draufsicht.

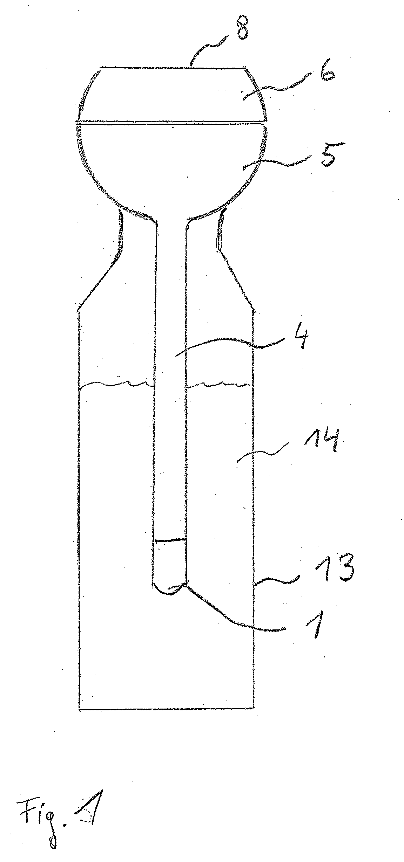

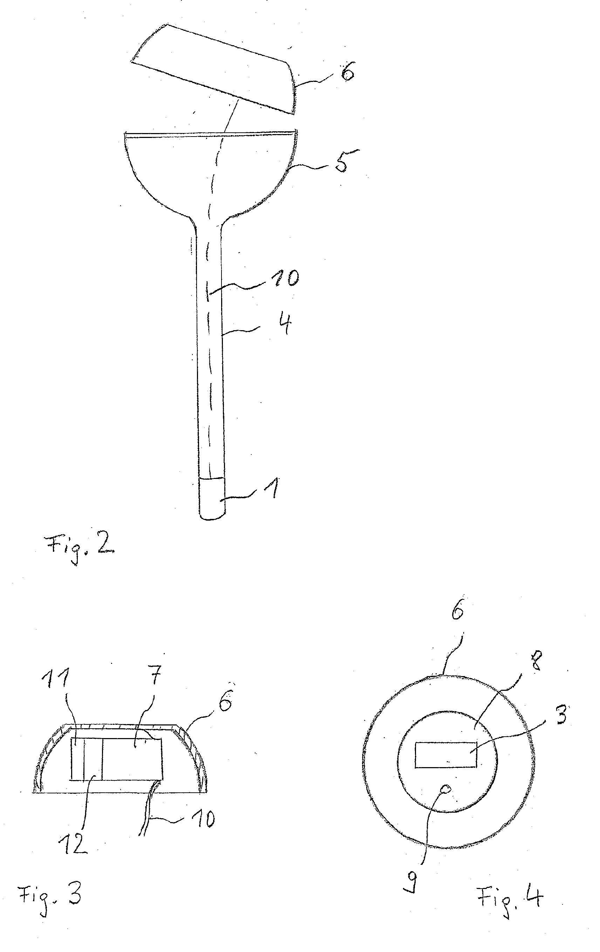

In Fig. 1 ist eine Babyflasche 13 mit eingeführtem, erfindungsgemäßen Thermometer dargestellt. Die Einfüllhöhe einer Babynahrung 14, beispielsweise Milch, befindet sich oberhalb eines Sensors 1 des Thermometers. Der Sensor 1 sitzt am unteren Ende eines Distanzrohres 4, das an einem Unterteil 5 eines Anzeigekopfes 2 befestigt ist. Das Unterteil 5 ist trichterförmig ausgebildet, so dass unabhängig von der Größe der Öffnung der Babyflasche das Thermometer so aufgesetzt werden kann, dass auch ein vollständiges Abdecken der Öffnung möglich ist. Auf dem Unterteil 5 ist ein Oberteil 6 mit einer Anzeigefläche 8 angeordnet. Das Oberteil 6 ist vom Unterteil 5 abnehmbar, wie aus Fig. 2 zu entnehmen ist. Eine Messwertübertragungsleitung 10 verbindet den Sensor 1 mit dem Oberteil 6, in dem eine Messwertverarbeitungseinheit 7 (Fig. 3) angeordnet ist. Die Messwertverarbeitungseinheit 7 ist mit einem Signalgeber 12, hier als akustischer Signalgeber vorgesehen, verbunden. Eine Stromversorgungseinheit, als Batterie 11 ausgeführt, versorgt die Messwertverarbeitungseinheit 7 mit der zur Betreibung erforderlichen Energie. Aus Fig. 4 ist die Anordnung einer Anzeigefläche 8 zu entnehmen, in der ein Display 3 und ein Ein- und Ausschalter 9 vorgesehen sind. Das Display 3 ermöglicht das Ablesen der digitalen Temperatursignale. In einer besonderen Ausgestaltung der Erfindung ist vorgesehen, dass die Temperaturen, die beim Erreichen ein akustisches Signal abgeben, durch entsprechende Programmierung der Messwertverarbeitungseinheit 7 fest eingestellt sind. Beispielsweise liegt die Verzehrtemperatur bei 37°C und die Verarbeitungstemperatur von Milchpulver bei 50°C. Die Benutzung des Thermometers bei der Herstellung der Babynahrung 14 kann beispielsweise so erfolgen:

Wasser wird in vorgeschriebener Menge abgekocht, ²/₃. hiervon wird in die Trinkflasche eingefüllt und bis auf 50°C abgekühlt. Dann wird Milchpulver hinzugegeben, geschüttelt, das letzte Drittel Wasser eingefüllt und so lange gewartet, bis die Trinktemperatur, nämlich 37°C, erreicht ist.
Damit die Mutter nicht ständig mit dem Temperaturmessen beschäftigt ist, wird nach dem Einfüllen des kochenden Wassers das Thermometer in die Flasche gesetzt, und es beginnt die Temperatur zu messen. Sind 50°C erreicht, ertönt ein akustisches Signal. Jetzt kann das Milchpulver hinzugegeben werden. Dann wird das Thermometer wieder aufgesetzt. Nun misst das Thermometer weiter bis eine Temperatur von 37°C erreicht ist. Es ertönt wiederum ein Signal und die Milch ist trinkfertig.

### Bezugszeichenliste

- 1: Sensor
- 2: Anzeigekopf
- 3: Display
- 4: Distanzrohr
- 5: Unterteil
- 6: Oberteil
- 7: Messwertverarbeitungseinheit
- 8: Anzeigefläche
- 9: Ein-/ Ausschalter
- 10: Messwertübertragungsleitung
- 11: Batterie
- 12: Signalgeber
- 13: Babyflasche
- 14: Babynahrung

## Patentansprüche

1. Thermometer zur Anzeige von Verarbeitungs- und Verzehrtemperaturen von Babynahrung, bestehend aus einem Temperatursensor (1), einem Anzeigekopf (2), wobei zwischen dem Anzeigekopf (2) und dem Temperatursensor (1) ein Distanzrohr (4) angeordnet ist, in dem Messwertübertragungsleitungen (10) geführt sind, **dadurch gekennzeichnet, dass** der Anzeigekopf (2) eine aus einem Oberteil (6) und einem Unterteil (5) bestehende, rotationssymmetrische, hohlkörperartige Grundform aufweist, wobei das Oberteil (6) und das Unterteil (5) trennbar verbunden sind, und am Unterteil (5) das Distanzrohr (4) angeordnet ist und dass das Oberteil (6) eine Anzeigefläche (8) mit einem Display (3) aufweist, wobei im Anzeigekopf (2) eine mit der Messwertübertragungsleitung (10) verbundene Messwertverarbeitungseinbeit (7), ein Signalgeber (12) und einer Stromversorgungseinheit (11) angeordnet sind.

2. Thermometer nach Anspruch 1, **dadurch gekennzeichnet, dass**, in der Anzeigefläche (8) eingelassen, ein Ein- und Ausschalter angeordnet ist.

3. Thermometer nach Anspruch 1 oder 2, **dadurch gekennzeichnet, dass** im Oberteil (6) als Stromversorgungseinheit eine Batterie (11) angeordnet ist.

4. Thermometer nach einem der Ansprüche 1 bis 3, **dadurch gekennzeichnet, dass** der Signalgeber (12) als akustischer Signalgeber ausgebildet ist.

5. Thermometer nach einem der Ansprüche 1 bis 4, **dadurch gekennzeichnet, dass** das Unterteil (5) trichterförmig ausgebildet ist.

6. Thermometer nach einem der Ansprüche 1 bis 5, **dadurch gekennzeichnet, dass** das Oberteil (6) kegelstumpfartig ausgebildet ist, wobei in der oberen Fläche des Kegelstumpfes die Anzeigefläche (8) angeordnet ist.

7. Thermometer nach einem der Ansprüche 1 bis 6, **dadurch gekennzeichnet, dass** das Unterteil (5) und das Distanzrohr (4) ein einteilig geformter Formkörper ist.

8. Thermometer nach einem der Ansprüche 1 bis 7, **dadurch gekennzeichnet, dass** das Unterteil (5) mit dem Oberteil (6) über eine Schraubverbindung verbindbar ist.

9. Thermometer nach einem der Ansprüche 1 bis 8, **dadurch gekennzeichnet, dass** die Messwertverarbeitungseinheit (7) so ausgebildet ist, dass ausgehend von einer deutlich höheren Temperatur des zu messenden Mediums als die Umgebungstemperatur beim Abkühlen bei bestimmten, fest eingestellten oder einstellbaren Temperaturen akustische Signale erzeugt werden.

10. Thermometer zur Anzeige von Verarbeitungs- und Verzehrtemperaturen von Babynahrung nach einem der Ansprüche 1 bis 9, bestehend aus einem Temperatursensor (1), einem Anzeigekopf (2), wobei zwischen dem Anzeigekopf (2) und dem Temperatursensor (1) ein Distanzrohr (4) angeordnet ist, in dem Messwertübertragungsleitungen (10) geführt sind, **dadurch gekennzeichnet, dass** der Anzeigekopf (2) eine aus einem Oberteil (6) und einem Unterteil (5) bestehende, rotationssymmetrische, hohlkörperartige Grundform aufweist, wobei das Oberteil (6) und das Unterteil (5) trennbar verbunden sind, und am Unterteil (5) das Distanzrohr (4) angeordnet ist und dass das Oberteil (6) eine Anzeigefläche (8) mit einem Display (3) aufweist, wobei im Oberteil (6) eine mit der Messwertübertragungsleitung (10) verbundene Messwertverarbeitungseinheit (7), ein Signalgeber (12) und einer Stromversorgungseinheit (11) angeordnet sind.
